# EUROPÄISCHE PATENTSCHRIFT

(11) **EP 3 939 777 B1**
(45) Veröffentlichungstag und Bekanntmachung des Hinweises auf die Patenterteilung: **02.04.2025**
(21) Anmeldenummer: 20210211.7
(22) Anmeldetag: 27.11.2020
(51) Int. Cl.: B30B 9/24, A22C 17/04, A22C 25/00

(54) **Vorrichtung zum trennen von miteinander vermischten Stoffen unterschiedlicher Fliessfähigkeit**
APPARATUS FOR SEPARATION OF MIXED MATERIALS OF DIFFERENT FLOWABILITY
Dispositif pour séparer des substances de fluidités différentes mélangées entre elles

(30) Priorität: 15.07.2020 DE 102020118720; 15.07.2020 DE 102020118644
(43) Veröffentlichungstag der Anmeldung: 19.01.2022
(73) Patentinhaber: NORDISCHER MASCHINENBAU RUD. BAADER GMBH + CO KG, 23560 Lübeck (DE)
(72) Erfinder: FUCHS, Michael, 23560 Lübeck (DE); HANF, Friedemann, 23560 Lübeck (DE); HÄRTLEIN, Joachim, 23560 Lübeck (DE); KARSTEN, Uwe, 23560 Lübeck (DE); SCHWARZ, Olaf, 23560 Lübeck (DE)
(74) Vertreter: Stork Bamberger Patentanwälte PartmbB

(56) Entgegenhaltungen:
- DE-A1- 3 516 623
- DE-A1- 4 116 476
- DE-C1- 3 907 401
- GB-A- 1 217 189
- US-A- 4 156 384

## Beschreibung

Die Erfindung betrifft eine Vorrichtung, ausgebildet und eingerichtet zum Trennen von miteinander vermischten Stoffen unterschiedlicher Fließfähigkeit, umfassend ein Rahmengestell, eine umlaufend angetriebene und am Rahmengstell gelagerte Hohltrommel mit perforierter Mantelfläche und mindestens einer mindestens teilweise offenen Stirnseite, ein von außen an die Mantelfläche unter Umschlingung eines Teils des Umfangs der Hohltrommel anpressbares, endloses Pressband, das umlaufend in Förderrichtung angetrieben ist, einen durch Pressband und Hohltrommel gebildeten Produkt-Einzugskeil zum Leiten eines aus Pressgut bestehenden Produktstroms zwischen die Hohltrommel und das Pressband in einem Einlaufbereich des Produktstroms in die Vorrichtung sowie eine Einrichtung zum Abführen von durch die perforierte Mantelfläche in den Hohlraum der Hohltrommel gepresstem Separiergut aus der mindestens teilweise offenen Stirnseite der Hohltrommel.

Die Erfindung betrifft weiterhin ein Verfahren zum Trennen von miteinander vermischten Stoffen unterschiedlicher Fließfähigkeit, umfassend die Schritte: Zuführen eines aus Pressgut bestehenden Produktstroms in einen Produkt-Einzugskeil, der durch eine Hohltrommel mit perforierter Mantelfläche und ein Pressband, das von außen an der Hohltrommel unter Umschlingung eines Teils des Umfangs anliegt, gebildet ist, umlaufendes Antreiben der Hohltrommel und/oder des Pressbandes zum Einziehen des Produktstroms zwischen die Hohltrommel und das Pressband, wobei die leichter fließenden Bestandteile des Produktstroms mittels des Pressbandes als Separiergut durch die Perforation der Mantelfläche der Hohltrommel in den Hohlraum der Hohltrommel gepresst und aus einer mindestens teilweise offenen Stirnseite der Hohltrommel abgeführt werden, während die schwerer fließenden Bestandteile des Produktstroms außen auf der Mantelfläche der Hohltrommel verbleiben und separat abgegeben werden.

Solche Vorrichtungen und Verfahren kommen in verschiedenen Industriebereichen, insbesondere jedoch in der lebensmittelverarbeitenden Industrie zum Einsatz. Mit den zuvor beschriebenen Vorrichtungen, die auch als Press-Trennmaschinen oder Separatoren bezeichnet werden, lassen sich verschiedenartige Stoffe einem Separierprozess unterziehen. Dazu werden die zu trennenden Stoffe, also das Pressgut bzw. Trenngut, das auch als Separat bezeichnet wird, von außen mittels eines Presselementes wie eines Pressbandes gegen die perforierte Mantelfläche M der Hohltrommel gedrückt.

Dabei gibt es zwei Varianten. Bei einer Art der Vorrichtung ist das Hauptprodukt der schwerer fließende Stoff, der sich außerhalb der Hohltrommel sammelt, während der leichter fließende Stoff, der unter Druck durch die Hohltrommel gedrückt wird, nur das Nebenprodukt ist. Eine solche Vorrichtung ist z. B. aus der US 4 156 384 A bekannt, welche die Merkmale des Oberbegriffs des Anspruchs 1 zeigt. Sie betrifft ein Verfahren zum Entwässern von Hüttenkäse. Dabei wird die Molke zusammen mit etwaigen anderen abgepressten Flüssigkeiten als leichter fließender Stoff durch die Hohltrommel gedrückt, während der Hüttenkäse als zu gewinnendes Produkt außen von der Hohltrommel abgenommen wird. Innen an der Hohltrommel haftende Molkereste werden mittels eines Abschabers abgenommen.

Bei der anderen Variante werden unter dem Druck die leichter fließenden Bestandteile des Pressguts als Hauptprodukt durch die Perforation der Mantelfläche M in den inneren Hohlraum der rotierenden Hohltrommel gepresst und abgeführt, während die schwerer fließenden Bestandteile des Pressgutes als Nebenprodukt außen auf der Mantelfläche der Hohltrommel und insbesondere auch an oder auf der Oberfläche des Presselementes verbleiben und separat abgegeben werden. Die Nebenprodukte, die auch als verbleibende Reste des Pressguts bezeichnet werden, können insbesondere am Presselement haften, auf dem Presselement liegen, vom Presselement abfallen und auch von der äußeren Mantelfläche M der Hohltrommel abfallen oder von dieser z.B. mittels eines Abschabelementes gelöst werden. Alle Reste, die nicht durch die Perforation der Mantelfläche M der Hohltrommel gepresst werden, werden über das Abführelement als Reststrom aus der Vorrichtung gefördert und mindestens teilweise weiterverarbeitet.

Einer Trennung im Sinne der Erfindung zugänglich sind Stoffe, Materialien bzw. Produkte, die sich bzw. deren Zusammensetzung sich durch ihr voneinander abweichendes Fließverhalten unterscheiden. Die Möglichkeit und/oder Notwendigkeit der Trennung von miteinander vermischten Stoffen unterschiedlicher Fließfähigkeit besteht insbesondere bei der Produktion von Lebensmitteln aus tierischem Ursprung (etwa der Abtrennung des Fleisches von der Haut, Sehnen, Knochen bzw. Gräten etc.), aus Obst und Gemüse (etwa der Abtrennung des Fruchtfleisches von Schale, Stielen, Kernen bzw. Steinen etc.), bei der Aufarbeitung von fehlverpackten Lebensmitteln (etwa der Abtrennung von Butter oder Käse vom Verpackungsmaterial) oder dergleichen. Konkrete Anwendungsbeispiele sind z.B. das Entkernen von Datteln oder das Entpacken von in Folie verpackten Käsescheiben.

Beim Verwerten, Entkernen oder Entpacken oder jedem anderen entsprechenden Separieren wird ein Produktstrom ausgehend von einem Produktzuführbereich mit einem Produkt-Einzugskeil zwischen dem Presselement, also z.B. dem Pressband, und der Hohltrommel hindurch zu einem Produktausgabebereich gefördert. Der Produkt-Einzugskeil wird durch die Anordnung von Pressband zu Hohltrommel gebildet und führt im Einlaufbereich des Produktstroms in die Vorrichtung zu einem (Einlauf-) Winkel. Durch den umlaufenden Antrieb der Hohltrommel und/oder den umlaufenden Antrieb des Pressbandes wird der Produktstrom im Einlaufbereich in Förderrichtung F zwischen die Hohltrommel und das Pressband eingezogen, so dass zwischen dem Pressband und der Hohltrommel ein (mit Produktstrom gefüllter) Abstand/Spalt entsteht. Hinter dem Produkteinzugskeil (bezogen auf die Förderrichtung des Produktstroms) ergibt sich zwischen dem Pressband und der Hohltrommel durch die Umschlingung ein Pressbereich, durch den der Produktstrom gefördert wird. Dabei werden die Stoffe unterschiedlicher Fließfähigkeit getrennt, indem die leichter fließenden Stoffe - am Beispiel der Verarbeitung der Produkte aus tierischem Ursprung das Fleisch - mindestens teilweise als Separiergut, das am Beispiel der Produkte aus tierischem Ursprung aus kleinen Fleischfäden bzw. kleinen Fleischsträngen besteht, in die Hohltrommel gedrückt und von dort abgeführt werden. Das Abführen erfolgt über eine mindestens teilweise geöffnete Stirnseite der Hohltrommel z.B. auf der Vorderseite der Vorrichtung, wobei die Vorderseite auch als Rückseite definiert werden kann. Die schwerer fließenden Stoffe - wiederum am Beispiel der Produkte aus tierischem Ursprung die Knochen, Sehnen, Haut etc. - werden als Nebenprodukte in Förderrichtung F des Produktstroms hinter der Hohltrommel im Produktausgabebereich gesammelt und abgeführt. Der durch die perforierte Mantelfläche M ins Innere der Hohltrommel, also in den Hohlraum, gedrückte Anteil des Produktstroms wird als Separiergut abgeführt und zur Weiterverarbeitung geleitet. Allerdings haftet der nicht durch die perforierte Mantelfläche M ins Innere der Hohltrommel gedrückte Reststrom des Produktstroms einschließlich der schwerer fließenden Bestandteile üblicherweise mindestens teilweise außen an der Mantelfläche der Hohltrommel. Dieser außen an der Hohltrommel anhaftende Reststrom kann z.B. durch Abschabmittel gelöst werden.

Das Abführen des Separierguts erfolgt über eine mindestens teilweise geöffnete Stirnseite der Hohltrommel z.B. auf der Vorderseite der Vorrichtung, wobei die Vorderseite auch als Rückseite definiert werden kann. Üblicherweise ist zum Abführen des Separierguts ein Abstreifelement und/oder eine Auswurfschnecke vorgesehen. Diese dienen dazu, dass Separiergut von der Innenfläche der Hohltrommel abzustreifen und sicherzustellen, dass das Separiergut die Trommel auch verlässt.

Eine solche Vorrichtung ist zum Beispiel aus der DE 35 16 623A1 bekannt. Die dort offenbarte Separiervorrichtung weist einen Abstreifer im unteren Bereich der Trommel auf, um das angesammelte Separiergut aus dem Trommelinneren zu leiten. Der Abstreifer streift das am Trommelinneren befindliche Separiergut ab und führt dieses aus der Trommel heraus. Um diesen Vorgang zu unterstützen, ist es bekannt, den Abstreifer in einem Winkel zur Trommelachse anzuordnen. In Verbindung mit der Rotationsbewegung der Trommel wird bewirkt, dass das Separiergut vom hinteren Bereich der Trommel zur geöffneten Stirnseite der Trommel bewegt wird und die Trommel verlässt.

Auch die DE 41 16 476 A1 offenbart eine solche Vorrichtung. Hier ist eine Ausräumeinrichtung in Form von schraubenförmig gewundenen Stegen an einem Tragkern vorgesehen, die in die Trommel einschiebbar ausgebildet ist.

Bei einem herkömmlichen Abstreifer kommt es zu einem Auflaufen des Separierguts am Abstreifer, d. h. das Separiergut staut sich in relevantem Maße am Abstreifer, und nachfolgendes Produkt drückt auf schon vorhandenes Produkt, bevor es die Trommel verlässt. Durch dieses Auflaufen des Separierguts am Abstreifer kommt es zu einer Komprimierung des Separierguts, was mit einer Veränderung der Produktstruktur einhergeht. Das Separiergut wird sehr stark kompaktiert und neigt dazu, schmierig zu werden, was dem Ableitprozess entgegenwirkt und die Produktqualität für nachfolgende Prozesse mindert.

Der Erfindung liegt somit die Aufgabe zugrunde, den Ableitprozess aus dem Trommelinneren zu verbessern und eine Vorrichtung sowie ein Verfahren zum Trennen von Stoffen unterschiedlicher Fließfähigkeit zur Verfügung zu stellen, die dafür sorgen, dass die Produktstruktur des Separierguts erhalten bleibt und insbesondere keine Kompaktierung einer zuvor lockeren Produktstruktur erfolgt.

Diese Aufgabe wird erfindungsgemäß mit einer Vorrichtung der eingangs genannten Art dadurch gelöst, dass die Einrichtung zum Abführen des Separierguts ein Abstreifelement umfasst, das im oberen Bereich der Hohltrommel in einer Position, die mindestens im Wesentlichen der Zwölf-Uhr-Position entspricht, angeordnet ist und das mindestens einen Abstreifelementabschnitt aufweist, wobei der Abstreifelementabschnitt ein erster Abstreifelementabschnitt ist, der der Innenseite der Mantelfläche benachbart ist und zu der Tangentialebene der Mantelfläche entgegen der Umdrehungsrichtung einen Neigungswinkel α größer als 90° aufweist.

Dabei bedeutet die Formulierung "mindestens im Wesentlichen der Zwölf-Uhr-Position entspricht" im Sinne der vorliegenden Erfindung eine Position, die auf einer Uhr zwischen zehn Uhr und zwei Uhr liegt, insbesondere zwischen elf Uhr und ein Uhr liegt, insbesondere in dem Bereich der durch eine Stellung zwischen elf und zwölf Uhr einerseits und zwölf und ein Uhr andererseits, definiert ist. Referenz für die Stellung ist dabei der erste Abstreifelementabschnitt. Mit dem vorderen Trommelrand in Ruhestellung als imaginäres Ziffernblatt ist der Referenzpunkt für die Stellung der Punkt, an dem der erste Abstreifelementabschnitt auf den Trommelrand trifft bzw. in seiner Verlängerung treffen würde. Besonders bevorzugt ist das Abstreifelement in einer Position zwischen elf und zwölf Uhr angeordnet. In diesem Bereich weist das Separiergut an der Trommelinnenfläche noch eine aufwärts, gegen die Schwerkraft gerichtete Geschwindigkeitskomponente auf. Ein Ablösen des Separierguts von der Trommelinnenfläche in diesem Bereich ist dadurch besonders produktschonend. Eine zusätzliche Beschleunigung neben der ohnehin wirkenden Schwerkraft wird vermieden, so dass das Separiergut sanfter nach unten fällt.

Die Tangentialebene der Mantelfläche" im Sinne der vorliegenden Erfindung ist die Ebene, die die Mantelfläche in der Geraden berührt, in der eine gedachte Verlängerung der Mitte des Abstreifelements in Breitenausdehnung die Mantelfläche schneiden würde.

Der Neigungswinkel α zur Tangentialebene der Mantelfläche entgegen der Umdrehungsrichtung ist der Winkel, der in Umdrehungsrichtung vor dem Abstreifelement mit diesem gebildet wird. Umgekehrt ist der Neigungswinkel zur Tangentialebene der Mantelfläche in Umdrehungsrichtung der Winkel, der in Umdrehungsrichtung hinter dem Abstreifelement von der Tangentialebene der Mantelfläche mit diesem gebildet wird.

Durch die Anordnung des Abstreifelementabschnitts im oberen Bereich der Hohltrommel und in einem Winkel zur Tangentialebene der Mantelfläche kann ein Stauen des Separierguts am Abstreifer vermieden werden. Anders als bei der herkömmlichen Anordnung des Abstreifers in einem Winkel von 90° zur Tangentialebene wird das Separiergut in der erfindungsgemäßen Ausbildung durch den Abstreifer nicht plötzlich gestoppt, sondern kann die durch die Drehung der Trommel hervorgerufene Geschwindigkeit verlangsamt abbauen. Selbst ein geringer Unterschied zu herkömmlich angeordneten Abstreifern durch Abwinklung ist bereits ausreichend, um ein Aufstauen zu verhindern. Zusätzlich wird durch die Anordnung des Abstreifers im oberen Trommelbereich bewirkt, dass das Separiergut unter Schwerkrafteinfluss in den unteren Bereich der Trommel fällt. Dabei behält das Separiergut, das durch das Abstreifelement von der Trommelinnenseite quasi "abgehobelt" wird, seine aufgelockerte Produktstruktur, da es frei fällt und nicht gedrückt oder gestaut wird. Das Separiergut erhält durch das erfindungsgemäße Abstreifelement einen Drall, wodurch die Struktur zusätzlich gelockert und ein Quetschen vermieden wird. Die Abwinkelung des Abstreifers führt zu einem produktschonenden Anlösen des auflaufenden Produktstroms. Dabei entsteht ein Krafteintrag in den Produktstrom, der ein beginnendes Aufbrechen desselben auslöst. Je nach Art des zu bearbeitenden Produkts werden so kleinere oder größere Produktteilmengen vom Produktstrom getrennt und schwerkraftunterstützt dem unteren Bereich der Trommel zugeführt.

Besonders bevorzugt ist der Neigungswinkel α größer als oder gleich 105°, vorzugsweise größer als oder gleich 110° und insbesondere größer als oder gleich 115°. Weiterhin ist der Neigungswinkel bevorzugt kleiner als oder gleich 135°, vorzugsweise kleiner als oder gleich 130° und insbesondere kleiner als oder gleich 125°. Besonders bevorzugt liegt der Neigungswinkel in einem Bereich von 105° bis 135°, vorzugsweise in einem Bereich von 110° bis 130° und insbesondere in einem Bereich von 115° bis 125°. Solche Winkel sorgen dafür, dass das Ablösen des Separierguts von der Trommelinnenfläche besonders effizient und schonend erfolgt.

In einer weiteren bevorzugten Ausführungsform weist das Abstreifelement einen zweiten Abstreifelementabschnitt auf, der zu dem ersten Abstreifelementabschnitt einen Winkel aufweist. "Einen Winkel aufweist" bedeutet dabei, dass die Abstreifelementabschnitte zueinander einen Winkel β ungleich 180° aufweisen, vorzugsweise einen Winkel β entgegen der Umdrehungsrichtung zwischen 90° und 180°, insbesondere zwischen 120° und 160°.

Der zweite Abstreifelementabschnitt unterstützt den begonnenen Prozess des Aufbrechens des Produktstroms und bewirkt zum einen, dass bereits getrennte Produktteilmengen sicher in Richtung des unteren Trommelbereiches befördert werden, und zum anderen, dass sich angelöste, aber noch nicht getrennte Bereiche des Produktstroms endgültig als Produktteilmengen trennen, um dann ebenfalls in Richtung des unteren Trommelbereiches geleitet zu werden.

Besonders bevorzugt ist der zweite Abstreifelementabschnitt an der der Mantelfläche abgewandten Kante des ersten Abstreifelementabschnitts und im Wesentlichen parallel zur Richtung der wirkenden Schwerkraft angeordnet.

"Im Wesentlichen parallel" bedeutet im Sinne der vorliegenden Erfindung dabei, dass der zweite Abstreifelementabschnitt parallel zur Richtung der wirkenden Schwerkraft oder um einen Winkel von bis zu 10°, insbesondere um einen Winkel von bis zu 5°, in die eine oder andere Richtung von dieser Richtung abweichend angeordnet ist.

Bei üblicher Ausführung der Vorrichtung, also bei Ausrichtung des Bodens/der Unterseite der Vorrichtung parallel zu dem Boden, auf dem die Vorrichtung aufgestellt ist, entspricht die Richtung der wirkenden Schwerkraft einer Ausrichtung senkrecht zur Tangentialebene der Mantelfläche in Zwölf-Uhr-Position. Ist die Vorrichtung geneigt aufgestellt, weicht die Richtung der wirkenden Schwerkraft von der Senkrechten zur Tangentialebene der Mantelfläche in Zwölf-Uhr-Position um einen Winkel ab, der der Neigung der Vorrichtung entspricht.

Die Zwölf-Uhr-Position ist die Position der Trommel, die bei üblicher Ausführung der Vorrichtung der Oberseite der Vorrichtung am nächsten ist.

Durch die Kombination von erstem und zweitem Abstreifelementabschnitt in der genannten Anordnung und Ausrichtung ist ein besonders kurzer Kontakt des Separierguts mit dem Abstreifelement gegeben. Für die Qualität des Produkts ist die Dauer des Kontaktes des Separierguts mit dem Ableitelement von entscheidender Bedeutung. Je besser gewährleistet ist, dass ein zeitlich andauernder gleitreibender Kontakt zwischen Separiergut und Abstreifelement möglichst gering ausfällt, desto weniger wird das Separiergut komprimiert und desto lockerer bleibt es. Anders als bei herkömmlichen Trennvorrichtungen mit herkömmlichen Abstreifelementen schiebt sich bei der vorliegenden Erfindung nicht das gesamte Separiergut am Abstreifelement vorbei aus der Trommel heraus. Stattdessen fällt das durch den ersten Abstreifelementabschnitt abgetrennte Separiergut zumeist beabstandet zum zweiten Abstreifelementabschnitt locker nach unten. Der parallel zur wirkenden Schwerkraft angeordnete zweite Abstreifelementabschnitt hat eine gewisse Begrenzungs- und Leitfunktion, ist aber keine Führung für das Separiergut wie bei herkömmlichen Abstreifern, entlang der das Separiergut aus der Trommel geschoben wird.

In noch einer anderen bevorzugten Ausführungsform weist das Abstreifelement einen dritten Abstreifelementabschnitt auf, der an der dem ersten Abstreifelementabschnitt abgewandten Kante des zweiten Abstreifelementabschnitts angeordnet ist und zur Tangentialebene der Mantelfläche in Umdrehungsrichtung einen Winkel γ kleiner als 90°, vorzugsweise kleiner als 75°, insbesondere kleiner als 50°, aufweist. Dieser dritte Abstreifelementabschnitt sorgt dafür, dass Produktteilmengen, die während des Verwirbelungsprozesses im unteren Trommelbereich aufgrund der Eigendynamik gegen das Ableitelement geworfen werden, wieder möglichst haftungsarm nach unten geleitet werden. Der dritte Abstreifelementabschnitt kann in Richtung der Trommelachse geneigt sein. Insbesondere kann das zur hinteren Stirnseite zeigende Ende des dritten Abstreifelementabschnitts höher liegen als das nach vorn zeigende Ende.

Vorzugsweise beträgt die Länge des zweiten Abstreifelementabschnitts mindestens das Doppelte, vorzugsweise mindestens das Dreifache und insbesondere mindestens das Vierfache der Länge des ersten und/oder des dritten Abstreifelementabschnitts. Von der Dimensionierung ist der parallel zur Schwerkraft ausgerichtete zweite Abstreifelementabschnitt somit der größte der drei Abschnitte. Es hat sich gezeigt, dass für den ersten Abstreifelementabschnitt schon eine verhältnismäßig geringe Ausdehnung in radialer Richtung ausreichend ist, um den gewünschten Effekt zu erzielen. Die Länge des ersten Abstreifelementabschnitts beträgt vorzugsweise das 0,1- bis das 0,5-Fache, insbesondere das 0,2- bis das 0,4-Fache des Trommelradius'.

Was die Gesamtausdehnung des Abstreifelements von der Innenseite der Mantelfläche M in radialer Ausdehnung Richtung Trommelinneres betrifft, beträgt diese vorteilhafterweise das 0,5- bis das 1,5-fache, vorzugsweise das 0,8- bis das 1,3-fache, insbesondere das 0,9- bis das 1,1-fache des Trommelradius'. So wird sichergestellt, dass auf der einen Seite das vom Inneren des Trommelmantels abgelöste Separiergut nicht wieder an die Trommelinnenseite, sondern stattdessen in den Auslassbereich der Trommel gelangt und abgeführt wird, und dass auf der anderen Seite das Separiergut im unteren Bereich der Trommel frei fallen kann und keine unnötige Fläche besteht, an der das Separiergut mit dem Abstreifelement in Kontakt kommen kann. Im unteren Bereich entsteht damit ein größerer Platz für das Separiergut, um die Trommel zu verlassen. Eine Eingrenzung durch das Abstreifelement ist an dieser Stelle nicht erforderlich und würde nur zu unnötigem und unerwünschtem zusätzlichen Haftkontakt führen.

Für die Ausrichtung des Abstreifelements in Relation zur Trommelachse gibt es verschiedene Varianten. Bei den herkömmlichen, im unteren Bereich der Trommel angeordneten Abstreifern war eine Anordnung mit einem gewissen Winkel bevorzugt, derart, dass das vordere Ende des Abstreifelements weiter in Umdrehungsrichtung angeordnet ist als das zur Rückseite der Trommel gerichtete Ende. Damit wurde das Herausführen des Separierguts aus der Trommel nach vorn unterstützt und erleichtert. Eine solche Anordnung ist beim Abstreifelement der vorliegenden Erfindung ebenfalls möglich. Besonders bevorzugt ist das Abstreifelement allerdings parallel zur Trommelachse angeordnet. Auf diese Weise werden die getrennten und nach unten geleiteten Produktteilmengen nicht direkt in Richtung des stirnseitigen Trommelauslasses, sondern im Wesentlichen senkrecht nach unten geführt. Die fortwährende Rotation der Trommel gibt den Produktteilmengen in der Folge über einen mehrere Trommelumdrehungen andauernden Zeitraum einen verwirbelnden Drall, der sich weiter vorteilhaft auf die Konsistenz des Separierguts auswirkt. Mit anderen Worten werden die Produktteilmengen während der Verwirbelung derartig schonend beaufschlagt, dass eine lockere, krümelige innere Produktstruktur entsteht. Insbesondere wird die Kontaktzeit der Produktteilmengen mit der Trommelmantelinnenfläche deutlich vermindert, so dass auch in dieser Phase eine Gleitreibung zwischen Separiergut und mechanischen Bauteilen auf ein Minimum reduziert wird.

Das mittels des Abstreifelementes aus der Hohltrommel abgeführte Separiergut kann auf ein beliebiges Abförderelement fallen, um zur Weiterverarbeitung oder Verpackung abtransportiert zu werden. Dies kann z.B. eine - vorzugsweise gekühlte - Wanne oder Rinne sein oder aber ein Transportband.

Das Abstreifelement besteht vorzugsweise aus Metall, insbesondere aus Edelstahl. Letzterer erfüllt die besonderen Anforderungen, die an Material, das in der Lebensmittelverarbeitung zum Einsatz kommt, gestellt werden. Aber auch keramische Materialien können verwendet werden.

In einer weiteren bevorzugten Ausführungsform ist an dem der Mantelfläche M zugewandten Ende des ersten Abstreifelementabschnitts eine abnehmbare Lippe angebracht. Auf diese Weise wird es möglich, den Bereich des Abstreifelements, der dem größten Verschleiß unterworfen ist, separat auszutauschen, ohne das gesamte Abstreifelement zu ersetzen. Die Lippe kann insbesondere aus dem gleichen Material bestehen wie das Abstreifelement, vorzugsweise Edelstahl. Ebenso ist es möglich, dass die Lippe aus einem anderen Material besteht. Bevorzugte Materialien sind hier Kunststoffe oder Gummi.

Für die Befestigung des Abstreifelements gibt es verschiedene Möglichkeiten. Vorzugsweise ist das Abstreifelement an einem in den Hohlraum der Hohltrommel hineinragenden Träger angeordnet. Dieser Träger kann von der Vorder- oder der Rückseite in die Trommel hineinragen. Üblicherweise ist die Trommel auf der Rückseite geschlossen, so dass der Träger vorzugsweise von vorn in die Trommel hineinragt. Besonders bevorzugt ist das Abstreifelement dabei an einer am Rahmengestell vorzugsweise lösbar befestigten Traverse angeordnet. Auf diese Weise ragt das Abstreifelement durch die mindestens teilweise offene Stirnseite in die Hohltrommel. Eine solche Anordnung ermöglicht einen einfachen Austausch des Abstreifelements, wenn erforderlich. Außerdem ist das Abstreifelement dadurch sehr einfach aus der Trommel zu entfernen und die Trommel daher gut im gesamten Bereich zugänglich, wenn sie z. B. gereinigt werden soll.

In einer weiteren bevorzugten Ausführungsform besteht zwischen dem der Mantelfläche (M) zugewandten Ende des ersten Abstreifelementabschnitts und der Mantelfläche ein Abstand von mindestens 0,5 mm, vorzugsweise mindestens 1,5 mm, besonders bevorzugt mindestens 2 mm, insbesondere mindestens 3 mm. Der Trommelmantel weist in der Rotationsbewegung ein gewisses Spiel auf. Die vorstehend angegebenen Abstände sorgen dafür, dass das Abstreifelement trotz eines gewissen Spiels der Trommel nicht auf die Trommel trifft und diese beschädigt. Außerdem ist es erwünscht, dass das Separiergut mindestens eine Umdrehung in der Trommel zurücklegt, bevor es abgeschabt wird. Dies gilt insbesondere, wenn während des Separiervorgangs gekühlt wird, da so eine besonders gute Kühlung des Separierguts erfolgt. Ein gewisser Abstand von erstem Abstreifelementabschnitt zum Trommelmantel ist daher wünschenswert. Der maximale Abstand liegt vorzugsweise bei 5 mm, um den Anforderungen der Arbeitssicherheit Rechnung zu tragen.

Durch das Abstreifelement und die mit diesem erzeugte besondere Verwirbelung des Separierguts wird gerade bei Kühlung sichergestellt, dass diese Kühlung das gesamte Separiergut, auch im Inneren, erreicht, da eine besonders innige Durchmischung erreicht wird, und zwar zudem ohne dass das Separiergut gequetscht und kompaktiert wird. Mit der erfindungsgemäßen Vorrichtung ist es daher möglich, besonders gut durchgekühltes Separiergut zu erhalten, das gleichzeitig von lockerer Struktur ist.

Ein Abstreifelement für eine Vorrichtung wie vorstehend beschrieben ist zur Anbringung im oberen Bereich der Hohltrommel, insbesondere in einer Position, die mindestens im Wesentlichen der Zwölf-Uhr-Position entspricht, und in einem Neigungswinkel zur Tangentialebene der Mantelfläche der Hohltrommel entgegen der Umdrehungsrichtung größer als 90° eingerichtet und ausgebildet. Vorzugsweise ist das Abstreifelement aus mindestens zwei Abstreifelementabschnitten gebildet, die zueinander einen Winkel aufweisen. Besonders bevorzugt weist das Abstreifelement drei Abstreifelementabschnitte auf, die jeweils zueinander derart einen Winkel aufweisen, dass das Abstreifelement in Seitenansicht insgesamt - je nach Umdrehungsrichtung der Trommel - die Form eines stilisierten "S" oder eines stilisierten Fragezeichens aufweist.

Die Aufgabe wird ferner gelöst durch ein Verfahren mit den eingangs genannten Schritten, bei dem das durch die perforierte Mantelfläche M in den Hohlraum der Hohltrommel gepresste Separiergut im oberen Bereich der Hohltrommel in einer Position, die mindestens im Wesentlichen der Zwölf-Uhr-Position entspricht, von der Innenfläche der Hohltrommel mittels eines Abstreifers mit einem ersten Abstreifelementabschnitt abgestreift wird, wobei der erste Abstreifelementabschnitt der Innenseite der Mantelfläche benachbart ist und zu der Tangentialebene der Mantelfläche entgegen der Umdrehungsrichtung einen Neigungswinkel (α) größer als 90° aufweist.

Mit dem erfindungsgemäßen Verfahren wird es möglich, ein Separiergut von körniger und lockerer Struktur zu erhalten, also die Qualität des Separierguts deutlich zu verbessern.

Vorzugsweise wird dabei das Separiergut mittels eines Abstreifers mit einem ersten Abstreifelementabschnitt, der der Innenseite der Mantelfläche benachbart ist und zu der Tangentialebene der Mantelfläche entgegen der Umdrehungsrichtung einen Winkel α größer als 105°, vorzugsweise größer als 110°, insbesondere größer als 115°, aufweist, abgestreift. Ein Abstreifen auf diese Weise führt zu einem besonders produktschonenden Anlösen des auflaufenden Produktstroms. Abhängig von der Art des zu bearbeitenden Produkts werden durch das auf diese Weise erfolgende Abstreifen bereits Produktteilmengen vom Produktstrom getrennt und schwerkraftunterstützt dem unteren Bereich der Trommel zugeführt.

Wie vorstehend für die Vorrichtung beschrieben, kann mit dem erfindungsgemäßen Verfahren ein Stauen des Separierguts am Abstreifer vermieden werden. Dadurch dass der erste Abstreifelementabschnitt einen Winkel von > 90° zur Tangentialebene der Mantelfläche entgegen der Umdrehungsrichtung aufweist, wird das Separiergut in der erfindungsgemäßen Ausbildung durch den Abstreifer nicht plötzlich gestoppt, sondern kann die durch die Drehung der Trommel hervorgerufene Geschwindigkeit verlangsamt abbauen. Schon ein geringer Unterschied zu herkömmlich angeordneten Abstreifern durch Abwinkelung ist ausreichend, um ein Aufstauen zu verhindern. Zusätzlich wird durch die Anordnung des Abstreifers im oberen Trommelbereich bewirkt, dass das Separiergut unter Schwerkrafteinfluss in den unteren Bereich der Trommel fällt. Dabei behält das Separiergut, das durch das Abstreifelement von der Trommelinnenseite quasi "abgehobelt" wird, seine aufgelockerte Produktstruktur, da es frei fällt und nicht gedrückt oder gestaut wird. Ferner erhält das Separiergut durch das erfindungsgemäße Abstreifelement einen Drall, wodurch es eine sehr lockere Struktur bekommt und ein Quetschen vermieden wird. Die Abwinkelung des Abstreifers führt zu einem produktschonenden Anlösen des auflaufenden Produktstroms. Dabei entsteht ein Krafteintrag in den Produktstrom, der ein beginnendes Aufbrechen desselben auslöst. Je nach Art des zu bearbeitenden Produkts werden so kleinere oder größere Produktteilmengen vom Produktstrom getrennt und schwerkraftunterstützt dem unteren Bereich der Trommel zugeführt.

Ganz besonders bevorzugt wird das Verfahren mit einer Vorrichtung mit mindestens einem Merkmal, wie in den Ansprüchen 1 bis 14 ausgeführt und/oder wie vorstehend näher beschrieben, durchgeführt.

Das erfindungsgemäße Verfahren ermöglicht ein kontaktarmes Ablösen des Separierguts von der Trommelinnenfläche, wobei die Kontaktzeit des Separierguts mit dem Abstreifelement minimiert wird. Anders als bei herkömmlichen Abstreifern wird das Separiergut nicht am Abstreifer entlanggeschoben, um aus der Trommel abgeführt zu werden. Stattdessen wird das Separiergut abgestreift und durch das Fallen zusätzlich aufgelockert. Unterstützt durch die Drehbewegung der Trommel, wird das Separiergut aus der Trommel hinausgeleitet.

Weitere sich aus den vorgenannten Verfahrensschritten ergebenden Vorteile wurden bereits im Zusammenhang mit der Vorrichtung beschrieben, weshalb zur Vermeidung von Wiederholungen auf die obigen Ausführungen verwiesen wird.

Weitere zweckmäßige und/oder vorteilhafte Merkmale und Weiterbildungen der Vorrichtung sowie des Verfahrens ergeben sich aus den Unteransprüchen und der Beschreibung. Besonders bevorzugte Ausführungsformen der Vorrichtung sowie das Verfahren werden anhand der beigefügten Zeichnung näher erläutert. In der Zeichnung zeigt:

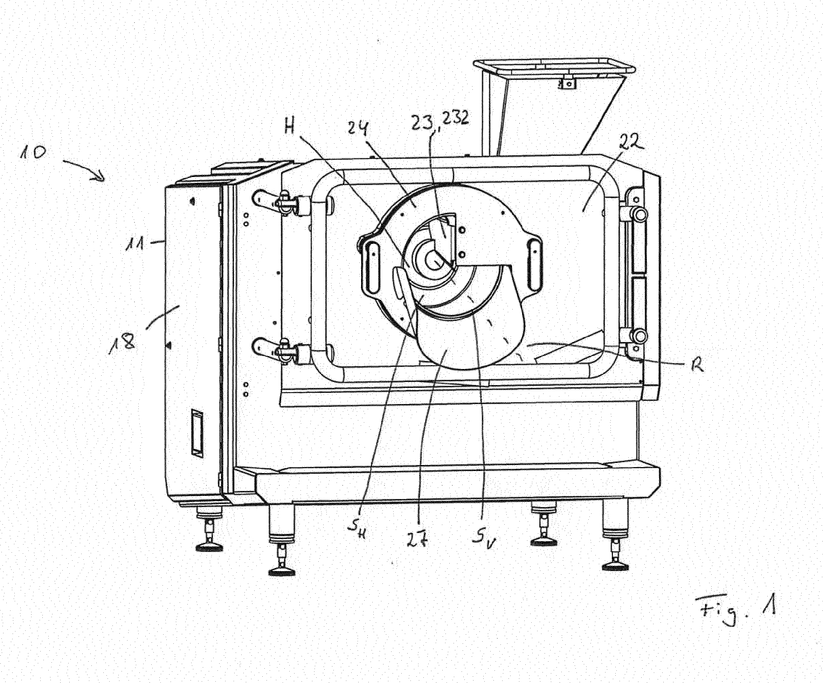

- Fig. 1: eine schematische Darstellung der erfindungsgemäßen Vorrichtung in einer perspektivischen Ansicht mit geschlossener Frontklappe,
- Fig. 2: eine schematische Darstellung der Vorrichtung gemäß Figur 1 ohne die Frontklappe in einer perspektivischen Ansicht,
- Fig. 3: eine schematische Teildarstellung einer weiteren Ausführungsform der erfindungsgemäßen Vorrichtung in perspektivischer Ansicht von vorn mit geschlossener Frontklappe,
- Fig. 4: die Ausführungsform gemäß Fig. 3 in Vorderansicht und
- Fig. 5: die Trommel der in Fig. 4 gezeigten Ausführungsform in Vorderansicht, bei der die Frontklappe weggelassen wurde, um das Abstreifelement in seiner Anordnung in der Trommel zu zeigen.

Die in der Zeichnung dargestellte Vorrichtung dient zum Trennen von Fleisch einerseits und Knochen, Knochenresten, Sehnen, Knorpeln und dergleichen andererseits und weist eine Mehrzahl bevorzugter Merkmale auf. Andere Ausführungsformen, die weniger oder andere Merkmale aufweisen, sind nicht explizit dargestellt. Die Vorrichtung kann in gleicher Weise auch zum Trennen z.B. von Fruchtfleisch von Kernen oder zum Trennen jeglicher anderen vermischten Stoffe unterschiedlicher Fließfähigkeit eingesetzt werden.

Die dargestellte Vorrichtung 10 ist zum Trennen von miteinander vermischten Stoffen unterschiedlicher Fließfähigkeit ausgebildet und eingerichtet. Die Vorrichtung 10 umfasst ein Rahmengestell 11, eine umlaufend angetriebene und am Rahmengstell 11 gelagerte Hohltrommel 12 mit perforierter Mantelfläche M und mindestens einer mindestens teilweise offenen Stirnseite S_{V}, S_{H}, ein von außen an die Mantelfläche unter Umschlingung eines Teils des Umfangs der Hohltrommel 12 anpressbares, endloses Pressband 13, das umlaufend angetrieben ist, einen durch Pressband 13 und Hohltrommel 12 gebildeten Produkt-Einzugskeil 14 zum Leiten eines aus Pressgut bestehenden Produktstroms zwischen die Hohltrommel 12 und das Pressband 13 in einem Einlaufbereich E des Produktstroms in die Vorrichtung 10, eine Stützvorrichtung 15 für das Pressband 13 mit wenigstens einem Stützelement 16, das auf der der Hohltrommel 12 entgegengesetzten Seite des Pressbandes 13 angeordnet ist, sowie eine Einrichtung 17 zum Abführen von durch die perforierte Mantelfläche M in den Hohlraum H der Hohltrommel 12 gepresstem Separiergut aus der mindestens teilweise offenen Stirnseite S_{V}, S_{H} der Hohltrommel 12.

Die Einrichtung 17 zum Abführen des Separierguts aus der Hohltrommel 12 kann integraler Bestandteil der Vorrichtung oder als separate Komponente ausgebildet sein. Die zur Vorderseite weisende Stirnseite S_{V} der Hohltrommel 12 ist offen ausgebildet, die gegenüberliegende Stirnseite S_{H} ist vorzugsweise geschlossen ausgebildet. Vorderseite und Rückseite können auch vertauscht sein.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Vorrichtung 10 weiterbilden können.

Das Rahmengestell 11 kann z. B. ein geschlossenes oder mindestens teilweise geschlossenes Gehäuse oder eine Profilkonstruktion oder dergleichen sein. Bevorzugt ist das Gehäuse allseitig im Wesentlichen geschlossen. Am oder im Rahmengestell 11 ist die (nicht dargestellte) Antriebseinheit für die Hohltrommel 12 und/oder das Pressband 13 angeordnet. Die Antriebseinheit kann einen gemeinsamen Antrieb oder separate Antriebsmittel umfassen. Die Rotationsachse R der Hohltrommel 12 verläuft quer zur Förderrichtung F des Förderbandes 13. In der perforierten Mantelfläche M der Hohltrommel 12 sind (in der Figur nur angedeutete und nicht explizit dargestellte) Bohrungen/Öffnungen ausgebildet, die in unterschiedlichen Mustern angeordnet sein können und den Durchtritt von Teilen des Produktstroms, insbesondere den leichter fließenden, weichen und quetschfähigen Teilen, in das Innere der Hohltrommel 12 erlauben. Die Hohltrommel 12 ist bevorzugt in ihrer gesamten Tiefe bzw. Breite, die den Arbeitsbereich bildet, mit den Öffnungen versehen. Das Pressband 13 besteht vorzugsweise aus einem elastischen Werkstoff, z.B. Gummi, Polyurethan oder dergleichen und ist um mehrere Umlenkelemente 19 geführt. Besonders bevorzugt ist das Umlenkelement 19, das in Förderrichtung F hinter der Hohltrommel 12 platziert ist, als Antriebswalze 20 ausgebildet, um das Pressband 13 und damit den Produktstrom ziehend an der Hohltrommel 12 vorbeizuführen. Besonders bevorzugt ist die Antriebswalze 20 gleichzeitig als Andruckwalze und/oder Spannwalze für das Pressband 13 ausgebildet und eingerichtet. Dazu ist die Antriebswalze 20 verstellbar ausgebildet. Durch den eigenen Antrieb der Hohltrommel 12 kann das Fördern des Produktstroms in Förderrichtung F noch unterstützt werden.

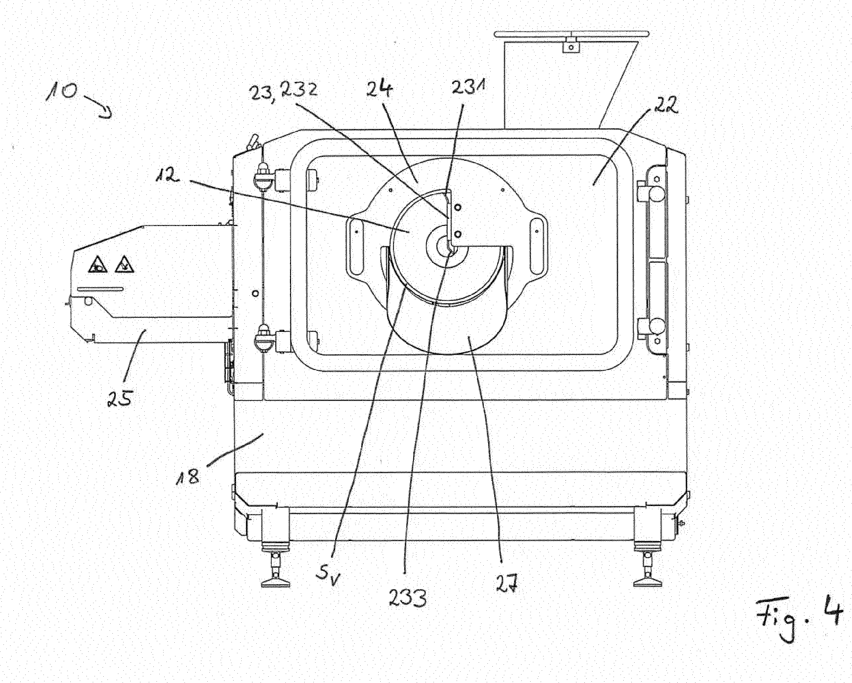

Optional können im Einlaufbereich E, also oberhalb des Produkt-Einzugskeils 14, und/oder im Auslaufbereich A, also in Förderrichtung F hinter der Hohltrommel 12, die auch als Lochtrommel bezeichnet wird, Abschabelemente angeordnet sein. Diese Abschabelemente können starr, also mit einem festen Abstand zur Hohltrommel 12 bzw. genauer zur Mantelfläche M, oder variabel steuerbar, also im Abstand zur Hohltrommel 12 bzw. genauer zur Mantelfläche M veränderlich, ausgebildet sein. Zusätzlich kann die Vorrichtung 10 auch ein (nicht gezeigtes) Abförderband umfassen, um die außen am Pressband 13 verbleibenden vom Produktstrom abgetrennten schwerer fließenden Bestandteile vom Pressband 13 zu entfernen. Bei der in Fig. 4 gezeigten Ausführungsform ragt das Abförderband über das Gehäuse 18 hinaus und ist durch eine Abdeckung 25 geschützt.

Die Hohltrommel 12 und das Pressband 13 können mit gleicher Geschwindigkeit angetrieben werden. Optional können die Hohltrommel 12 und das Pressband 13 jedoch auch mit unterschiedlichen Geschwindigkeiten angetrieben werden. Die Geschwindigkeitsdifferenz ist mittels einer Steuer- und/oder Regelungseinrichtung steuerbar und/oder regelbar. Die Stützvorrichtung 15 kann eine Stützkette, ein Stützband oder eine Rollenbahn sein.

Besonders bevorzugt ist das Rahmengestell 11 als Gehäuse 18 ausgebildet ist, das einen mindestens die Hohltrommel 12, das Pressband 13 und die Stützvorrichtung 15 aufnehmenden, geschlossenen Arbeitsraum 21 umfasst, der mindestens einseitig eine zu öffnende und zu verschließende Klappe 22 aufweist, die den Arbeitsraum 21 mit Ausnahme der mindestens teilweise offenen Stirnseite S_{V} der Hohltrommel 12 abdeckt. Die Klappe 22 kann eine Frontklappe des Gehäuses 18 darstellen. Die Frontklappe ermöglicht im geschlossenen Zustand die Abschottung des Arbeitsraums 21 gegenüber der Umgebung. Im offenen Zustand, außer Betrieb, ist die Zugänglichkeit zu Reinigungs- und/oder Wartungszwecken gewährleistet. Das Gehäuse 18 kann aber auch andere verschließbare Öffnungen und Zugänge an anderen Positionen aufweisen.

Das Abführen des durch die Mantelfläche M gepressten Separierguts erfolgt mittels der Einrichtung 17 zum Abführen in Form von Abstreifelement 23 in Verbindung mit der Rotation der Hohltrommel 12 und ggf. mittels eines sich daran anschließenden Elements zum Abführen 27, von dem aus das Separiergut in eine (nicht gezeigte) Wanne oder auf ein (ebenfalls nicht gezeigtes) Transportband fallen kann.

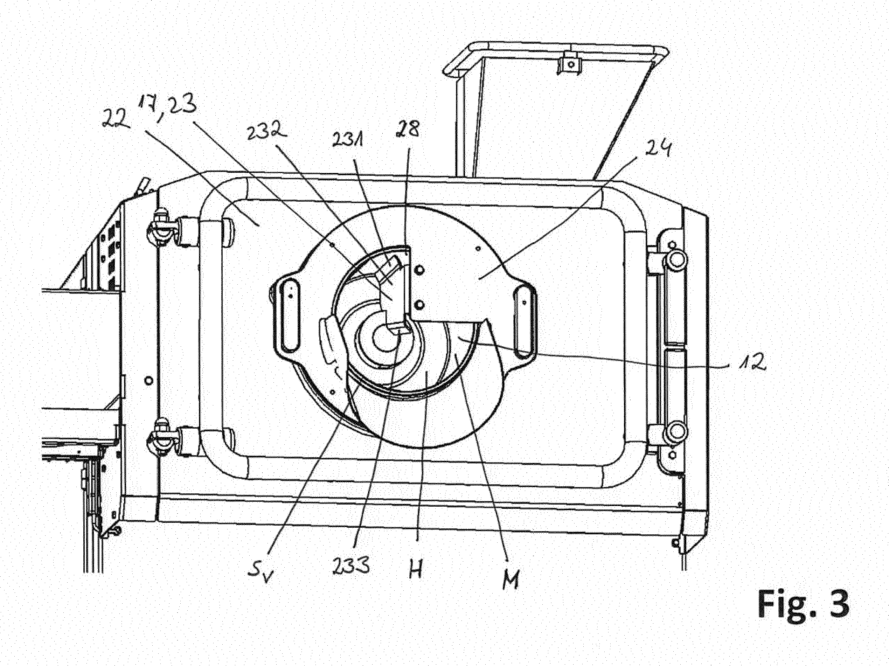

In Figur 3 ist das Abstreifelement 23 dargestellt, das lösbar an der Traverse 24 befestigt ist. Das Abstreifelement 23 ist in einer Position, die im Wesentlichen der Zwölf-Uhr-Position 28, einer Kurz-vor-zwölf-Uhr-Position, entspricht, im oberen Bereich der Hohltrommel 12 angeordnet. Das Abstreifelement 23 weist drei Abstreifelementabschnitte 231, 232, 233 auf. Der erste Abstreifelementabschnitt 231 ist der Innenseite der Mantelfläche M benachbart angeordnet und weist zu der Tangentialebene der Mantelfläche entgegen der Umdrehungsrichtung einen Neigungswinkel α von ca. 115° auf.

Der erste Abstreifelementabschnitt 231 streift das Separiergut von der Trommelinnenseite ab, wenn dieses mindestens eine teilweise Umdrehung in der Hohltrommel 12 zurückgelegt hat. Durch Abwinklung des ersten Abstreifelementabschnitts 231 wird das Separiergut behutsam von der Mantelfläche M abgehoben und fällt unter Schwerkrafteinfluss in den unteren Bereich der Hohltrommel 12, von wo aus es sich durch die Rotation der Hohltrommel 12 bedingt in Richtung der offenen Stirnseite S_{V} bewegt. Da sich das Separiergut auf diese Weise nicht am Abstreifelement 23 staut, behält es seine aufgelockerte Produktstruktur bei. Das abgeführte Separiergut kann z.B. auf eine Abführrinne 27 oder dergleichen fallen, die optional gekühlt sein kann und dazu mit einer entsprechenden Einrichtung verbunden ist.

An der der Mantelfläche M abgewandten Kante des ersten Abstreifelementabschnitts 231 ist ein zweiter Abstreifelementabschnitt 232 angeordnet, und zwar in einem Winkel β von ca. 150° zu dem ersten Abstreifelementabschnitt 231. Der zweite Abstreifelementabschnitt ist im Wesentlichen parallel zur wirkenden Schwerkraft und senkrecht zur Tangentialebene der Mantelfläche M in Zwölf-Uhr-Position angeordnet.

An der dem ersten Abstreifelementabschnitt 231 abgewandten Kante des zweiten Abstreifelementabschnitts 232 ist ein dritter Abstreifelementabschnitt 233 angeordnet. Dieser weist zur Tangentialebene der Mantelfläche M in Umdrehungsrichtung U einen Winkel γ von ca. 45° auf.

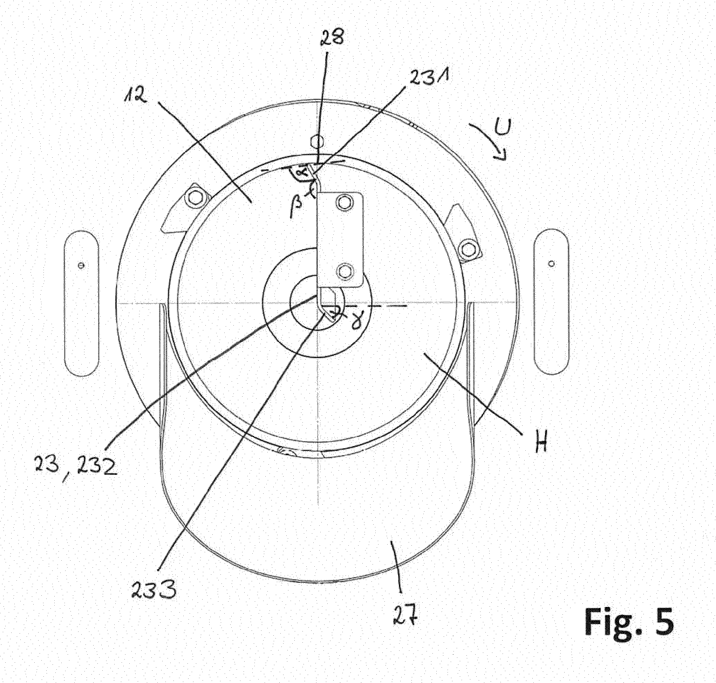

Das Abstreifelement 23 ist parallel zur Trommelachse R angeordnet und weist die Form eines stilisierten Fragezeichens auf. Die Gesamtausdehnung des Abstreifelements 23 von der Innenseite der Mantelfläche M in radialer Ausdehnung entspricht dem Trommelradius. Die Länge des zweiten Abstreifelementabschnitts 232 beträgt dabei ca. das 5-Fache der Länge des ersten Abstreifelementabschnitts 231 und ca. das 6-Fach der Länge des zweiten Abstreifelementabschnitts 233. Die der Mantelfläche M zugewandte Kante des Abstreifelements 23 ist zur Mantelfläche 2 mm beabstandet. In der in Fig. 4 und 5 gezeigten Ausführungsform ist der dritte Abstreifelementabschnitt 233 in Richtung der Trommelachse derart geneigt, dass das zur hinteren Stirnseite S_{H} der Hohltrommel 12 zeigende Ende des dritten Abstreifelementabschnitts 233 höher liegt als das nach vorn zeigende Ende.

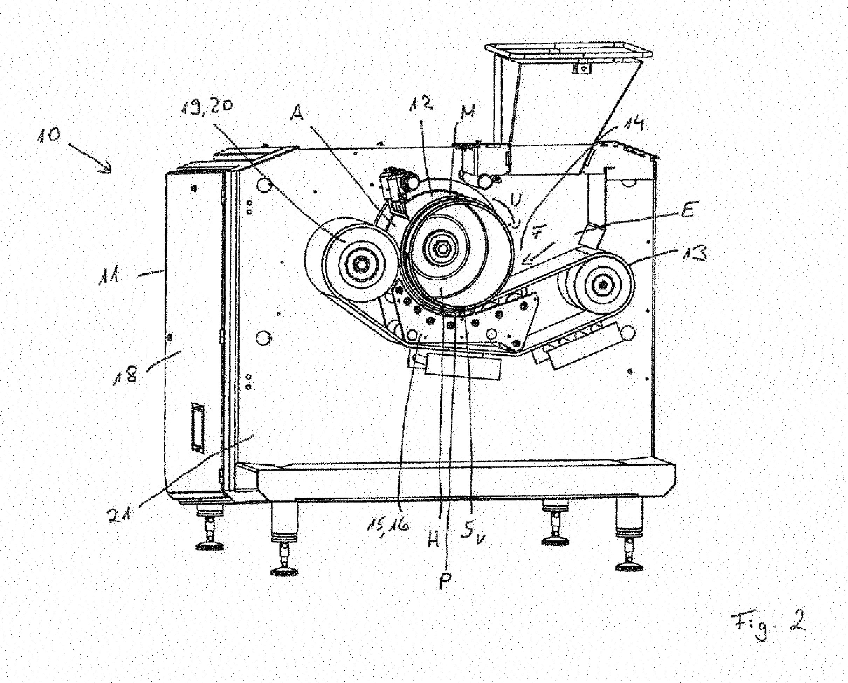

Im Folgenden wird das Verfahren anhand der Zeichnung näher beschrieben. Das Verfahren dient und ist entsprechend zum Trennen von miteinander vermischten Stoffen unterschiedlicher Fließfähigkeit ausgebildet und eingerichtet. Zunächst wird ein aus Pressgut bestehender Produktstrom in einen Produkt-Einzugskeil 14, der durch eine Hohltrommel 12 mit perforierter Mantelfläche M und ein Pressband 13, das von außen an der Hohltrommel 12 unter Umschlingung eines Teils des Umfangs anliegt, gebildet ist, zugeführt. Für den Trennprozess werden die Hohltrommel 12 und das Pressband 13 zum Einziehen des Produktstroms zwischen die Hohltrommel 12 und das Pressband 13 umlaufend angetrieben. Bevorzugt ist die Hohltrommel 12 im Uhrzeigersinn angetrieben, während die Antriebswalze 20 für das Pressband (in der Ansicht gemäß der Figur 2 zu sehen) entgegen dem Uhrzeigersinn angetrieben ist, so dass die Hohltrommel 12 und das Pressband 13 im Bereich der Umschlingung, also im Pressbereich P, die gleiche Förderrichtung F aufweisen, wobei die Geschwindigkeiten gleich sein oder voneinander abweichen können. Durch den Transport des Produktstroms durch den Pressbereich P werden die leichter fließenden Bestandteile des Produktstroms mittels des Pressbandes 13 als Separiergut durch die Perforation der Mantelfläche M der Hohltrommel 12 in den inneren Hohlraum H der Hohltrommel 12 gepresst und aus einer mindestens teilweise offenen Stirnseite S_{V} und/oder S_{H} der Hohltrommel 12 abgeführt, während die schwerer fließenden Bestandteile des Produktstroms außen auf der Mantelfläche M der Hohltrommel 12 verbleiben und separat abgegeben werden.

Vorzugsweise wird das Pressband 13 während des Trennens des Produktstroms in seine Bestandteile auf der der Hohltrommel 12 entgegengesetzten Seite des Pressbandes 13 durch eine mindestens ein Stützelement 16 umfassende Stützvorrichtung 15 gestützt.

Zum Abführen des Separierguts streift der erste Abstreifelementabschnitt 231 des Abstreifelements 23 das durch die perforierte Mantelfläche M in den Hohlraum H der Hohltrommel 12 gepresste Separiergut im oberen Bereich der Hohltrommel 12 in einer Kurz-vor-zwölf-Uhr-Position von der Innenfläche der Hohltrommel 12 ab. Das Abstreifen erfolgt durch die abgewinkelte Anordnung des ersten Abstreifelementabschnitts 231 sehr produktschonend. Die bestehende Struktur des Separierguts bleibt erhalten und wird nicht kompaktiert. Das Separiergut fällt unter Schwerkrafteinfluss in den unteren Bereich der Hohltrommel 12, wobei es durch das erfindungsgemäße Abstreifelement einen Drall erhält, was den Erhalt einer lockeren Struktur unterstützt.

Da das Abstreifelement 23 parallel zur Trommelachse R angeordnet ist, werden die getrennten und nach unten geleiteten Produktteilmengen nicht direkt in Richtung der offenen Stirnseite S_{V} der Hohltrommel 12 geleitet, sondern im Wesentlichen senkrecht nach unten geführt. Die fortwährende Rotation der Hohltrommel 12 gibt den Produktteilmengen in der Folge über einen mehrere Trommelumdrehungen andauernden Zeitraum einen verwirbelnden Drall, der sich weiter vorteilhaft auf die Konsistenz des Separierguts auswirkt. Dies vermindert außerdem die Kontaktzeit der Produktteilmengen mit der Trommelmantelinnenfläche deutlich, so dass eine Gleitreibung zwischen Separiergut und mechanischen Bauteilen auf ein Minimum reduziert wird.

Durch die Rotation der Hohltrommel 12 wird das Separiergut in Richtung deren offener Stirnseite S_{V} bewegt und verlässt auf diesem Weg die Hohltrommel über das Abführelement 27 z. B. in eine gekühlte Wanne (nicht gezeigt) für den Transport oder die Weiterverarbeitung.

## Patentansprüche

1. Vorrichtung (10), ausgebildet und eingerichtet zum Trennen von miteinander vermischten Stoffen unterschiedlicher Fließfähigkeit, umfassend ein Rahmengestell (11), eine in Umdrehungsrichtung (U) umlaufend angetriebene und am Rahmengestell (11) gelagerte Hohltrommel (12) mit perforierter Mantelfläche (M), und mindestens einer mindestens teilweise offenen Stirnseite (S_{V}, S_{H}), ein von außen an die Mantelfläche unter Umschlingung eines Teils des Umfangs der Hohltrommel (12) anpressbares, endloses Pressband (13), das umlaufend in Förderrichtung F angetrieben ist, einen durch Pressband (13) und Hohltrommel (12) gebildeten Produkt-Einzugskeil (14) zum Leiten eines aus Pressgut bestehenden Produktstroms zwischen die Hohltrommel (12) und das Pressband (13) in einem Einlaufbereich (E) des Produktstroms in die Vorrichtung (10) sowie eine Einrichtung (17) zum Abführen von durch die perforierte Mantelfläche (M) in den Hohlraum (H) der Hohltrommel (12) gepresstem Separiergut aus der mindestens teilweise offenen Stirnseite (S_{V}, S_{H}) der Hohltrommel (12),
**dadurch gekennzeichnet,**
**dass** die Einrichtung (17) zum Abführen des Separierguts ein Abstreifelement (23) umfasst, das im oberen Bereich der Hohltrommel (12) in einer Position, die mindestens im Wesentlichen der Zwölf-Uhr-Position entspricht, angeordnet ist und das mindestens einen Abstreifelementabschnitt (231, 232, 233) aufweist, wobei der Abstreifelementabschnitt ein erster Abstreifelementabschnitt (231) ist, der der Innenseite der Mantelfläche benachbart ist und zu der Tangentialebene der Mantelfläche entgegen der Umdrehungsrichtung einen Neigungswinkel (α) größer als 90° aufweist.

2. Vorrichtung (10) nach Anspruch 1, **dadurch gekennzeichnet, dass** der Neigungswinkel (α) größer als oder gleich 105°, vorzugsweise größer als oder gleich 110° und insbesondere größer als oder gleich 115° ist.

3. Vorrichtung (10) nach Anspruch 1 oder 2, **dadurch gekennzeichnet, dass** das Abstreifelement (23) einen zweiten Abstreifelementabschnitt (232) aufweist, der zu dem ersten Abstreifelementabschnitt (231) einen Winkel (β) aufweist.

4. Vorrichtung (10) nach Anspruch 3, **dadurch gekennzeichnet, dass** der zweite Abstreifelementabschnitt (232) an der der Mantelfläche (M) abgewandten Kante des ersten Abstreifelementabschnitts (231) und im Wesentlichen parallel zur Richtung der wirkenden Schwerkraft angeordnet ist.

5. Vorrichtung (10) nach einem der Ansprüche 1 bis 4, **dadurch gekennzeichnet, dass** das Abstreifelement einen dritten Abstreifelementabschnitt (233) aufweist, der an der dem ersten Abstreifelementabschnitt abgewandten Kante des zweiten Abstreifelementabschnitts (232) angeordnet ist und zur Tangentialebene der Mantelfläche in Umdrehungsrichtung (U) einen Winkel (γ) kleiner als 90°, vorzugsweise kleiner als 75°, insbesondere kleiner als 50°, aufweist.

6. Vorrichtung (10) nach einem der Ansprüche 1 bis 5, **dadurch gekennzeichnet, dass** die Länge des zweiten Abstreifelementabschnitts (232) mindestens das Doppelte, vorzugsweise mindestens das Dreifache und insbesondere mindestens das Vierfache der Länge des ersten und/oder dritten Abstreifelementabschnitts (231, 233) beträgt.

7. Vorrichtung (10) nach einem der Ansprüche 1 bis 6, **dadurch gekennzeichnet, dass** die Gesamtausdehnung des Abstreifelements (23) von der Innenseite der Mantelfläche (M) in radialer Ausdehnung das 0,5- bis das 1,5-fache, vorzugsweise das 0,8- bis das 1,3-fache, insbesondere das 0,9- bis das 1,1-fache des Trommelradius' beträgt.

8. Vorrichtung (10) nach einem der Ansprüche 1 bis 7, **dadurch gekennzeichnet, dass** zwischen dem der Mantelfläche (M) zugewandten Ende des ersten Abstreifelementabschnitts (231) und der Mantelfläche ein Abstand von mindestens 0,5 mm, vorzugsweise mindestens 1 mm, besonders bevorzugt mindestens 2 mm, insbesondere mindestens 3 mm, besteht.

9. Vorrichtung (10) nach einem der Ansprüche 1 bis 8, **dadurch gekennzeichnet, dass** das Abstreifelement (23) parallel zur Trommelachse angeordnet ist.

10. Vorrichtung (10) nach einem der Ansprüche 1 bis 9, **dadurch gekennzeichnet, dass** an dem der Mantelfläche (M) zugewandten Ende des ersten Abstreifelementabschnitts (231) eine abnehmbare Lippe angebracht ist.

11. Vorrichtung (10) nach einem der Ansprüche 1 bis 10, **dadurch gekennzeichnet, dass** das Abstreifelement (23) an einem in den Hohlraum (H) der Hohltrommel (12) hineinragenden Träger (24) angeordnet ist.

12. Vorrichtung (10) nach Anspruch 11, **dadurch gekennzeichnet, dass** das Abstreifelement (23) an einer am Rahmengestell (11) vorzugsweise lösbar befestigten Traverse (24) angeordnet ist.

13. Verfahren zum Trennen von miteinander vermischten Stoffen unterschiedlicher Fließfähigkeit, umfassend die Schritte:
- Zuführen eines aus Pressgut bestehenden Produktstroms in einen Produkt-Einzugskeil (14), der durch eine Hohltrommel (12) mit perforierter Mantelfläche (M) und ein Pressband (13), das von außen an der Hohltrommel (12) unter Umschlingung eines Teils des Umfangs anliegt, gebildet ist,
- umlaufendes Antreiben der Hohltrommel (12) und/oder des Pressbandes (13) zum Einziehen des Produktstroms zwischen die Hohltrommel (12) und das Pressband (13),
- wobei die leichter fließenden Bestandteile des Produktstroms mittels des Pressbandes (13) als Separiergut durch die Perforation der Mantelfläche (M) der Hohltrommel (12) in den Hohlraum (H) der Hohltrommel (12) gepresst und aus einer mindestens teilweise offenen Stirnseite (S_{V}, S_{H}) der Hohltrommel (12) abgeführt werden, während die schwerer fließenden Bestandteile des Produktstroms außen auf der Mantelfläche (M) der Hohltrommel (12) verbleiben und separat abgegeben werden,
**dadurch gekennzeichnet, dass** das durch die perforierte Mantelfläche (M) in den Hohlraum (H) der Hohltrommel (12) gepresste Separiergut im oberen Bereich der Hohltrommel (12) in einer Position, die mindestens im Wesentlichen der Zwölf-Uhr-Position entspricht, von der Innenfläche der Hohltrommel (12) mittels eines Abstreifers (23) mit einem ersten Abstreifelementabschnitt (231) abgestreift wird, wobei der erste Abstreifelementabschnitt (231) der Innenseite der Mantelfläche benachbart ist und zu der Tangentialebene der Mantelfläche entgegen der Umdrehungsrichtung einen Neigungswinkel (α) größer als 90° aufweist.

14. Verfahren nach Anspruch 13, **dadurch gekennzeichnet, dass** der erste Abstreifelementabschnitt (231) zu der Tangentialebene der Mantelfläche entgegen der Umdrehungsrichtung einen Winkel (α) größer als 105°, insbesondere größer als 130°, aufweist.

15. Verfahren nach Anspruch 13 oder 14, **dadurch gekennzeichnet, dass** es mit einer Vorrichtung (10) nach einem oder mehreren der Ansprüche 1 bis 12 ausgeführt wird.

## Claims

1. Apparatus (10), configured and adapted for separating materials of different flowability that are mixed together, comprising a frame or frame structure (11); a hollow drum (12) which is mounted on the frame structure (11) and driven in rotation in the rotational direction (U) and has a perforated peripheral surface (M) and at least one at least partially open end face (S_{V}, S_{H}); a continuous press belt (13) which can be pressed from the outside onto the peripheral surface when wrapped around part of the circumference of the hollow drum (12) and which is driven in circulation in the conveying direction F; a product intake wedge (14) formed by the press belt (13) and hollow drum (12), for conducting a product stream, consisting of a product to be pressed, into the apparatus (10) between the hollow drum (12) and the press belt (13) in an inlet area or inlet zone (E) of the product stream; and a device (17) for discharging separated product pressed from the outside through the perforated peripheral surface (M) into the hollow or hollow chamber (H) of the hollow drum (12) from the at least partially open end face (S_{V}, S_{H}) of the hollow drum (12);
**characterized in that**
the device (17) for discharging the separated product comprises a scraping element (23) which is arranged in the upper region of the hollow drum (12), in particular in a position that corresponds at least substantially to the 12 o'clock position, and which comprises at least one scraping element section (231, 232, 233), wherein the scraping element section is a first scraping element section (231) which is adjacent to the inside of the peripheral surface and has a tilt angle (α) of more than 90° to the tangential plane of the peripheral surface against the direction of rotation.

2. Apparatus (10) according to claim 1, **characterized in that** the tilt angle (α) is greater than or equal to 105°, preferably greater than or equal to 110°, and in particular greater than or equal to 115°.

3. Apparatus (10) according to claim 1 or 2, **characterized in that** the scraping element (23) has a second scraping element section (232) which has an angle (β) to the first scraping element section (231).

4. Apparatus (10) according to claim 3, **characterized in that** the second scraping element section (232) is arranged on the edge of the first scraping element section (231) facing away from the peripheral surface (M) and substantially parallel to the direction of the active gravitational force.

5. Apparatus (10) according to any one of claims 1 to 4, **characterized in that** the scraping element has a third scraping element section (233) which is arranged on the edge of the second scraping element section (232) facing away from the first scraping element section and has an angle (γ) of less than 90°, preferably less than 75°, in particular less than 50°, to the tangential plane of the peripheral surface in the direction of rotation (U).

6. Apparatus (10) according to any one of claims 1 to 5, **characterized in that** the length of the second scraping element section (232) is at least twice, preferably at least three times and in particular at least four times the length of the first and/or third scraping element section (231, 233).

7. Apparatus (10) according to any one of claims 1 to 6, **characterized in that** the total extent of the scraping element (23) from the inside of the peripheral surface (M) in the radial extent amounts to 0.5 to 1.5 times, preferably 0.8 to 1.3 times, in particular 0.9 to 1.1 times the drum radius.

8. Apparatus (10) according to any one of claims 1 to 7, **characterized in that** between the end of the first scraping element section (231) facing the peripheral surface (M) and the peripheral surface, there is a distance of at least 0.5 mm, preferably at least 1 mm, particularly preferably at least 2 mm, in particular at least 3 mm.

9. Apparatus (10) according to any one of claims 1 to 8, **characterized in that** the scraping element (23) is arranged parallel to the drum axis.

10. Apparatus (10) according to any one of claims 1 to 9, **characterized in that** a removable lip is attached to the end of the first scraping element section (231) facing the peripheral surface (M).

11. Apparatus (10) according to any one of claims 1 to 10, **characterized in that** the scraping element (23) is arranged on a carrier protruding into the hollow chamber (H) of the hollow drum (12).

12. Apparatus (10) according to claim 11, **characterized in that** the scraping element (23) is arranged on a crosspiece (24) which is preferably releasably attached to the frame structure (11).

13. Method for separating materials of different flowability that are mixed together, comprising the steps:
- supplying a product stream, comprising a product to be pressed, into a product intake wedge (14) which is formed by a hollow drum (12) with a perforated peripheral surface (M) and a press belt (13) which lies on and is wrapped around a part of a circumference of the hollow drum (12) from outside,
- driving the hollow drum (12) and/or the press belt (13) in circulation in order to draw in the product stream between the hollow drum (12) and the press belt (13),
- wherein the more easily flowing constituents of the product stream are pressed as separated product into the hollow or hollow chamber (H) of the hollow drum (12) by means of the press belt (13) through the perforations of the peripheral surface (M) of the hollow drum (12), and discharged from an at least partially open end face (S_{V}, S_{H}) of the hollow drum (12), while the less easily flowing constituents of the product stream remain on the outside of the peripheral surface (M) of the hollow drum (12) and are discharged separately,
**characterized in that** the separated product, pressed through the perforated peripheral surface (M) into the hollow chamber (H) of the hollow drum (12), is scraped away from the inner surface of the hollow drum (12) in the upper region of the hollow drum (12) in a position which corresponds at least substantially to the 12 o'clock position by a scraper (23) with a first scraping element section (231), and which comprises at least one scraping element section (231, 232, 233), wherein the first scraping element section (231) is adjacent to the inside of the peripheral surface and has a tilt angle (α) of more than 90° to the tangential plane of the peripheral surface against the direction of rotation.

14. Method according to claim 13, **characterized in that** the first scraping element section (231) has an angle (α) of more than 105°, in particular of more than 130°, to the tangential plane of the peripheral surface against the direction of rotation.

15. Method according to claim 13 or 14, **characterized in that** it is carried out with an apparatus (10) according to one or more of claims 1 to 12.

## Revendications

1. Dispositif (10), configuré et adapté pour séparer des substances de fluidités différentes mélangées entre elles, comprenant un bâti (11), un tambour creux (12) entraîné en circulation dans la direction de rotation (U) et monté sur le bâti (11), avec une surface d'enveloppe (M) perforée, et au moins un côté frontal (S_{V}, S_{H}) au moins partiellement ouvert, une bande de pressage (13) sans fin, pouvant être pressée de l'extérieur contre la surface d'enveloppe en s'enroulant autour d'une partie de la périphérie du tambour creux (12), qui est entraînée en circulation dans la direction de convoyage F, un coin d'introduction de produit (14) formé par la bande de pressage (13) et le tambour creux (12) pour guider un flux de produit constitué de matière à presser entre le tambour creux (12) et la bande de pressage (13) dans une zone d'entrée (E) du flux de produit dans le dispositif (10), ainsi qu'un appareil (17) pour évacuer du côté frontal (S_{V}, S_{H}) au moins partiellement ouvert du tambour creux (12) la matière à séparer pressée à travers la surface d'enveloppe (M) perforée dans la cavité (H) du tambour creux (12),
**caractérisé en ce que**
l'appareil (17) pour évacuer la matière à séparer comprend un élément de raclage (23) qui est agencé dans la zone supérieure du tambour creux (12) dans une position qui correspond au moins essentiellement à la position de douze heures et qui présente au moins une section d'élément de raclage (231, 232, 233), la section d'élément de raclage étant une première section d'élément de raclage (231) qui est voisine du côté intérieur de la surface d'enveloppe et présente un angle d'inclinaison (α) supérieur à 90° par rapport au plan tangentiel de la surface d'enveloppe à l'encontre de la direction de rotation.

2. Dispositif (10) selon la revendication 1, **caractérisé en ce que** l'angle d'inclinaison (α) est supérieur ou égal à 105°, de préférence supérieur ou égal à 110° et notamment supérieur ou égal à 115°.

3. Dispositif (10) selon la revendication 1 ou 2, **caractérisé en ce que** l'élément de raclage (23) présente une deuxième section d'élément de raclage (232) qui présente un angle (β) par rapport à la première section d'élément de raclage (231).

4. Dispositif (10) selon la revendication 3, **caractérisé en ce que** la deuxième section d'élément de raclage (232) est agencée sur le bord de la première section d'élément de raclage (231) détourné de la surface d'enveloppe (M) et essentiellement parallèle à la direction de la force de gravité qui s'exerce.

5. Dispositif (10) selon l'une quelconque des revendications 1 à 4, **caractérisé en ce que** l'élément de raclage présente une troisième section d'élément de raclage (233) qui est agencée sur le bord de la deuxième section d'élément de raclage (232) détourné de la première section d'élément de raclage et qui présente un angle (γ) inférieur à 90°, de préférence inférieur à 75°, notamment inférieur à 50°, par rapport au plan tangentiel de la surface d'enveloppe dans la direction de rotation (U).

6. Dispositif (10) selon l'une quelconque des revendications 1 à 5, **caractérisé en ce que** la longueur de la deuxième section d'élément de raclage (232) est au moins le double, de préférence au moins le triple et notamment au moins le quadruple de la longueur de la première et/ou de la troisième section d'élément de raclage (231, 233).

7. Dispositif (10) selon l'une quelconque des revendications 1 à 6, **caractérisé en ce que** l'extension totale de l'élément de raclage (23) depuis le côté intérieur de la surface d'enveloppe (M) en extension radiale est de 0,5 à 1,5 fois, de préférence de 0,8 à 1,3 fois, notamment de 0,9 à 1,1 fois le rayon du tambour.

8. Dispositif (10) selon l'une quelconque des revendications 1 à 7, **caractérisé en ce qu'**entre l'extrémité de la première section d'élément de raclage (231) tournée vers la surface d'enveloppe (M) et la surface d'enveloppe, il existe une distance d'au moins 0,5 mm, de préférence d'au moins 1 mm, de manière particulièrement préférée d'au moins 2 mm, notamment d'au moins 3 mm.

9. Dispositif (10) selon l'une quelconque des revendications 1 à 8, **caractérisé en ce que** l'élément de raclage (23) est agencé parallèlement à l'axe du tambour.

10. Dispositif (10) selon l'une quelconque des revendications 1 à 9, **caractérisé en ce qu'**une lèvre amovible est disposée à l'extrémité de la première section d'élément de raclage (231) qui est tournée vers la surface d'enveloppe (M).

11. Dispositif (10) selon l'une quelconque des revendications 1 à 10, **caractérisé en ce que** l'élément de raclage (23) est agencé sur un support (24) pénétrant dans la cavité (H) du tambour creux (12).

12. Dispositif (10) selon la revendication 11, **caractérisé en ce que** l'élément de raclage (23) est agencé sur une traverse (24) fixée, de préférence de manière amovible, au bâti (11).

13. Procédé de séparation de substances de fluidités différentes mélangées entre elles, comprenant les étapes :
- l'amenée d'un flux de produit constitué de matière à presser dans un coin d'introduction de produit (14), qui est formé par un tambour creux (12) avec une surface d'enveloppe (M) perforée et une bande de pressage (13), qui s'applique de l'extérieur contre le tambour creux (12) en s'enroulant autour d'une partie de la périphérie,
- l'entraînement en circulation du tambour creux (12) et/ou de la bande de pressage (13) pour tirer le flux de produit entre le tambour creux (12) et la bande de pressage (13),
- les constituants du flux de produit s'écoulant plus facilement étant pressés au moyen de la bande de pressage (13) en tant que matière à séparer à travers la perforation de la surface d'enveloppe (M) du tambour creux (12) dans la cavité (H) du tambour creux (12) et étant évacués d'un côté frontal (S_{V}, S_{H}) au moins partiellement ouvert du tambour creux (12), tandis que les constituants du flux de produit s'écoulant plus difficilement restent à l'extérieur sur la surface d'enveloppe (M) du tambour creux (12) et sont déchargés séparément,
**caractérisé en ce que** la matière à séparer pressée dans la cavité (H) du tambour creux (12) à travers la surface d'enveloppe (M) perforée est raclée, dans la zone supérieure du tambour creux (12) dans une position qui correspond au moins essentiellement à la position de douze heures, de la surface intérieure du tambour creux (12) au moyen d'un racleur (23) avec une première section d'élément de raclage (231), la première section d'élément de raclage (231) étant voisine du côté intérieur de la surface d'enveloppe et présentant un angle d'inclinaison (α) supérieur à 90° par rapport au plan tangentiel de la surface d'enveloppe à l'encontre de la direction de rotation.

14. Procédé selon la revendication 13, **caractérisé en ce que** la première section d'élément de raclage (231) présente un angle (α) supérieur à 105°, notamment supérieur à 130°, par rapport au plan tangentiel de la surface d'enveloppe à l'encontre de la direction de rotation.

15. Procédé selon la revendication 13 ou 14, **caractérisé en ce qu'**il est mis en œuvre avec un dispositif (10) selon une ou plusieurs des revendications 1 à 12.
